# FASCICULE DE BREVET EUROPEEN

(11) **EP 0 694 714 B1**
(45) Date de publication et mention de la délivrance du brevet: **26.11.1997**
(21) Numéro de dépôt: 95420222.2
(22) Date de dépôt: 28.07.1995
(51) Int. Cl.: F16H 61/26, F16C 11/06

(54) **Dispositif de commande d'une boîte de vitesses notamment du type mono-barre découplé**
Entkoppelter Schalthebelmechanismus mit einteiligem Schalthebelarm
Single arm, decoupled gear lever linkage

(30) Priorité: 29.07.1994 FR 9409729
(43) Date de publication de la demande: 31.01.1996
(73) Titulaire: ADWEST OCI SA, 42350 La Talaudière (FR)
(72) Inventeur: Tholly, Paul, F-42170 Saint Just Saint Rambert (FR)
(74) Mandataire: Thivillier, Patrick

(56) Documents cités:
- DE-A- 1 909 551
- DE-A- 3 833 557
- FR-A- 1 107 558
- FR-A- 2 617 923
- GB-A- 922 959
- US-A- 4 305 676

## Description

L'invention se rattache au secteur technique des accessoires pour automobiles, notamment des boites de vitesses.

Plus particulièrement, l'invention concerne une commande de boites de vitesses du type mono-barre découplée. D'une manière parfaitement connue, ce mode de commande comprend, pour l'essentiel, une barre accouplée au pied du levier de vitesses. L'extrémité de cette barre est solidaire transversalement d'une bague ou manchon, dont l'alésage reçoit un élément de renvoi, apte à assurer le passage des vitesses.

Dans ce but, cet élément de renvoi présente, en bout d'un bras support, une tête hémisphérique conformée pour être engagée avec capacité de déplacement multidirectionnel, dans l'alésage de la bague que présente la barre de commande. L'alésage de la bague présente, sur la totalité de sa profondeur, un revêtement du type de celui connu sous la marque TEFLON®. La tête hémisphérique peut être réalisée dans un matériau dur et présenter périphériquement des facettes planes pour diminuer le frottement. Sous l'effet de déplacement de la barre de commande par le levier de vitesses, la tête hémisphérique de l'élément de renvoi, est déplacée dans l'alésage téflonné de la bague selon différentes orientations angulaires.

Si ce principe de commande de boites de vitesses donne satisfaction dans son ensemble, certains inconvénients et problèmes existent malgré tout. Par exemple étant donné que par construction, la bague qui reçoit la tête hémisphérique de l'élément de renvoi, ne peut être protégée, des poussières, gravillons ou autres agents extérieurs, peuvent s'introduire inopinément, à l'intérieur de cette bague. Il en résulte une usure du revêtement de l'alésage de la bague et de la tête hémisphérique, de sorte que la commande de la boite de vitesses sera moins précise et moins agréable dans le temps.

En outre, la tête hémisphérique, constituant un ensemble monobloc et figée en formes et dimensions, est introduite dans l'alésage de la bague avec un certain jeu fonctionnel. Or, un tel jeu fonctionnel, même très réduit, est susceptible de créer des vibrations à l'ensemble du dispositif de commande qui, indirectement, vont être transmises au niveau du levier de commande et, par conséquent, perçues directement par le conducteur.

Cet état de la technique peut être illustré, à titre indicatif nullement limitatif, par l'enseignement du brevet DE 1909551.

En ce qui concerne le problème de vibrations évoqué précédemment, ce dernier est suggéré par l'enseignement du brevet FR 1107558. Toutefois, ce brevet trouve une application différente de celle de la demande, étant donné qu'elle concerne notamment une articulation à rotule pour timoneries de direction d'un véhicule automobile. Il en résulte, par construction, une structure de base différente qui ne peut être comparée à un dispositif de commande d'une boîte de vitesses. Par exemple, d'une manière fondamentalement différente, dans le brevet précité, la rotule est engagée dans une chape qui est fermée, et n'est pas soumise à des déplacements multidirectionnels.

L'invention s'est fixée pour but de remédier à ces inconvénients, de manière simple, sûre, efficace et rationnelle.

Le problème que se propose de résoudre l'invention est de diminuer l'usure entre la tête hémisphérique de l'élément de renvoi et la bague de la barre de commande de la boîte de vitesses, et de supprimer le jeu au niveau de cet accouplement.

Le dispositif de commande selon l'invention, du type de ceux mettant en oeuvre une barre reliant le pied du levier de vitesses, présentant une bague dont l'alésage reçoit, avec capacité de déplacement multidirectionnel une tête très sensiblement hémisphérique solidaire d'un élément de renvoi pour le passage des vitesses, permet de résoudre ce problème. Dans ce but, selon l'invention, la tête hémisphérique de l'élément de renvoi comprend un corps agencé pour le montage, avec capacité de déformation élastique d'un anneau de frottement hémisphérique, qui est fendu de manière à faire varier son diamètre à l'encontre d'organes élastiques portés par le corps qui est rigide, ledit anneau coopérant avec l'alésage de la bague en y étant logé en position de compression pour supprimer tout jeu.

Pour résoudre le problème posé d'avoir un contact intime permanent entre la tête hémisphérique et la bague, les agencements du corps sont constitués par une gorge circulaire recevant le ou les organes déformables élastiquement et sur lesquels prend appui l'anneau fendu, centré dans ladite gorge, le ou lesdits organes étant conformés pour soumettre l'anneau à une force de poussée ayant tendance à l'écarter.

Avantageusement, le ou les organes déformables élastiquement sont constitués par une bague en matière déformable pour être sollicitée élastiquement, lors d'une déformation de l'anneau fendu, correspondant à un effet de resserrement dudit anneau.

Dans une autre forme de réalisation, le ou les organes déformables élastiquement sont constitués par des joncs élastiques.

Pour résoudre le problème posé d'avoir entre la tête hémisphérique et la bague, un coefficient de frottement réduit, l'anneau fendu présente un revêtement externe glissant du type de celui connu sous la marque TEFLON®. Dans ce cas, il n'est plus nécessaire de prévoir un revêtement spécial pour l'alésage de la bague.

On prévoit également de réaliser le corps recevant l'anneau fendu, dans un matériau souple déformable élastiquement.

L'invention est exposée, ci-après plus en détail à l'aide des dessins annexés, dans lesquels :

La figure 1 est une vue à caractère purement schématique montrant le principe de fonctionnement du dispositif de commande d'une boite de vitesse du type monobarre.

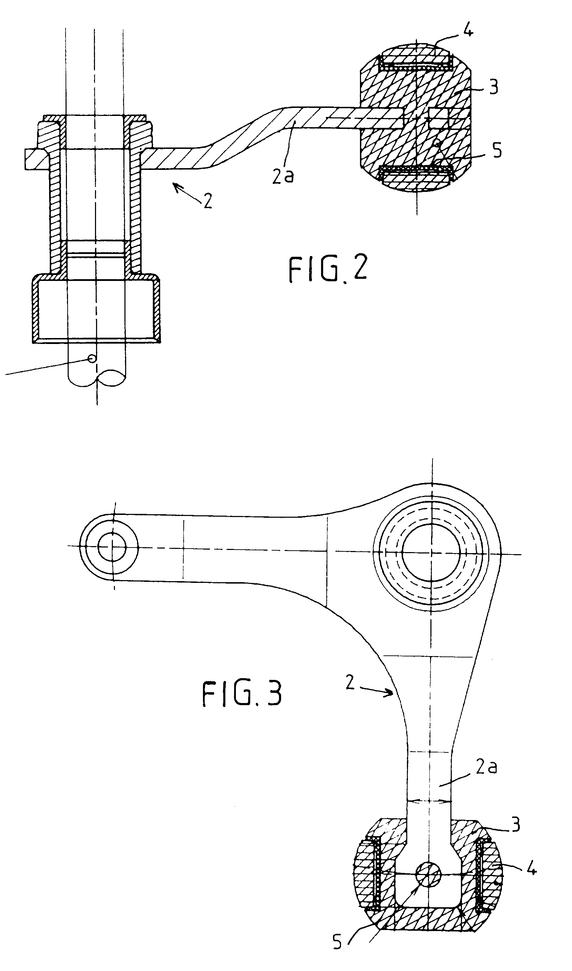

La figure 2 est une vue en coupe de l'élément d'accouplement considérée selon la ligne 2.2 de la figure 3.

La figure 3 est une vue en plan correspondant à la figure 2.

La figure 4 est une vue partielle à caractère schématique avant introduction de la tête hémisphérique dans la bague de la barre de commande.

La figure 5 est une vue correspondant à la figure 4, après introduction de la tête hémisphérique dans la bague de la barre de commande.

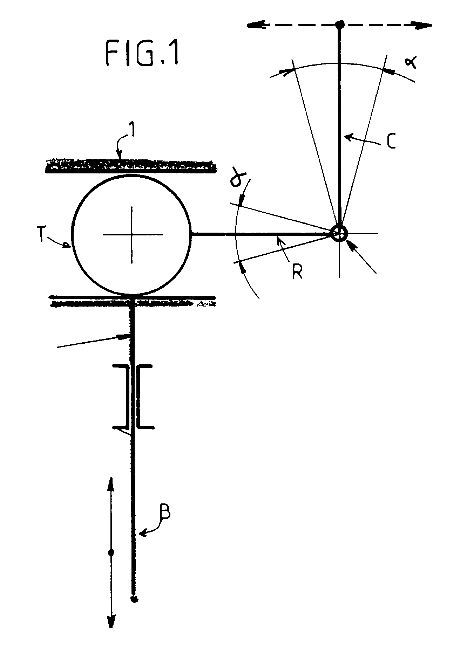

On rappelle, pour une meilleure compréhension de la suite de la description, qu'un dispositif de commande d'une boite de vitesses du type monobarre découplée, met en oeuvre essentiellement une barre (B) reliant le pied du levier de vitesses et dont l'autre extrémité est solidaire d'une bague (1) dans laquelle est montée, avec capacité de déplacement, une tête hémisphérique (T) solidaire d'un élément de renvoi (R). L'élément de renvoi (R) est lui-même assujetti à tout système de commande et de transmission (C), pour assurer le passage des vitesses. On renvoie à la figure 1 qui montre le principe de fonctionnement d'un tel dispositif.

Toujours de manière connue, la tête hémisphérique (T) est solidaire d'un bras (2a) que présente le corps (2) de l'élément de renvoi (R). Cet élément (R) n'est pas décrit en détail car il ne fait pas partie de l'objet spécifique de l'invention et est parfaitement connu par un homme du métier.

Selon l'invention, la tête hémisphérique (T) comprend un corps rigide (3) rendu solidaire du bras (2a), en y étant bloqué en translation et en rotation. Le corps (3) a une forme générale très sensiblement sphérique et présente, dans sa partie médiane, une gorge circulaire (3a) conformée pour le montage d'un anneau de frottement (4), en combinaison avec des organes déformables élastiquement (5).

L'anneau (4) est fendu transversalement en (4a), de manière à faire varier son diamètre à l'encontre des organes déformables élastiquement (5). L'anneau (4) est centré dans la gorge (3a) et coopère en appui avec les organes élastiques (5), montés dans ladite gorge, en étant aptes à soumettre l'anneau à une force de poussée ayant tendance à l'écarter par rapport à la fente (4a). L'anneau (4) a un profil transversal hémisphérique, pour assurer le débattement dans l'alésage (1a) de la bague (1).

La déformation diamétrale de l'anneau en combinaison avec les organes élastiques (5) peut s'effectuer selon différentes solutions. Par exemple, les organes (5) sont constitués par une bague en matière caoutchouteuse, apte à être engagée et centrée dans la gorge (3a) du corps (3) de la tête hémisphérique. Cette bague présente, en débordement de sa périphérie, des nervures circulaires profilées (5a) pour être sollicitées élastiquement lors d'une déformation de l'anneau fendu (4), correspondant à un effet de resserrement dudit anneau, après son introduction dans l'alésage (1a) de la bague (1) de la barre (B). La bague (5) peut présenter des flasques latéraux circulaires (5b), d'une part, pour son centrage dans la gorge (3a) et, d'autre part, pour le centrage de l'anneau (4).

Dans une autre forme de réalisation, les organes (5) peuvent être constitués par des joncs élastiques montés dans des rainures correspondantes formées dans le fond de la gorge (3a).

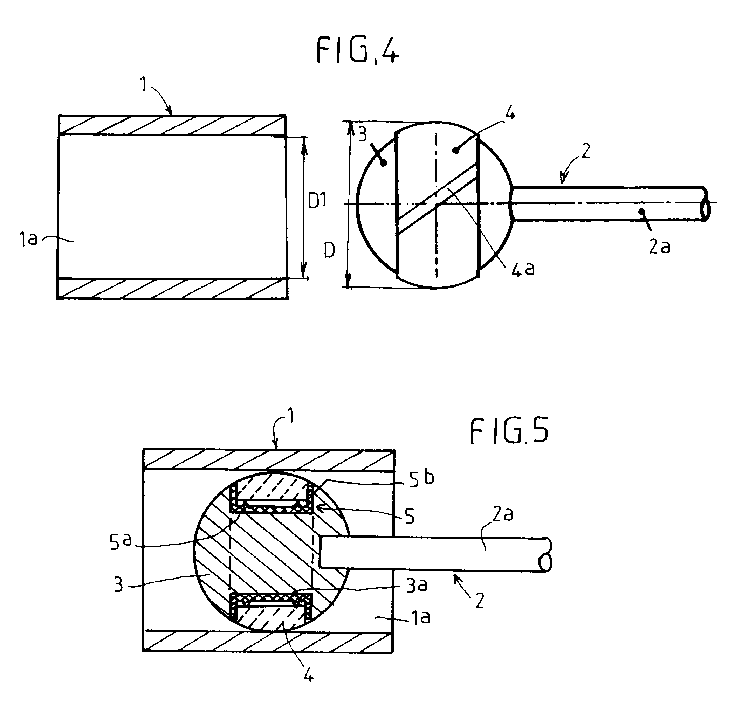

Compte-tenu du montage de l'anneau (4) sur le corps (3) en combinaison avec les organes élastiques (5), il apparait que le diamètre (D) dudit anneau, avant introduction de la tête (T) dans l'alésage (1a) de la bague (1), est très légèrement supérieur au diamètre (D1) dudit alésage (1a) (figure 4). La tête hémisphérique est donc emmanchée à force à l'intérieur de l'alésage (1a). Il en résulte que l'anneau fendu (4) comprime les organes élastiques (5) sous l'effet de resserrement de son diamètre, de sorte que ledit anneau est maintenu à l'intérieur de l'alésage (1a), en étant soumis à un effort de compression constant, résultant de la différence entre les diamètres (D) et (D1) et de la réaction des organes élastiques (5). L'anneau (4) est donc soumis par les organes élastiques (5) à une force de poussée ayant tendance à l'écarter diamétralement par rapport à la fente (4a), afin de le maintenir en contact intime constant, avec l'alésage (1a) de la bague (1) et cela sans aucun jeu.

L'anneau (4) tel que défini, présente un revêtement externe glissant du type de celui connu sous la marque TEFLON®. A noter que le revêtement TEFLON® peut être plus épais dans la zone active et fonctionnelle de l'anneau (4).

Compte-tenu de ces dispositions, il n'est plus nécessaire de traiter l'alésage (1a) de la bague (1), d'un revêtement glissant du type TEFLON®, ce qui s'avère particulièrement avantageux, étant donné qu'il était difficile de procéder à un tel traitement.

On prévoit également, sans pour cela sortir du cadre de l'invention, de réaliser le corps (3) dans un matériau souple apte à être déformé élastiquement en combinaison avec l'anneau fendu (4).

Les avantages ressortent bien de la description, en particulier on souligne et on rappelle :
- la suppression du jeu et de l'usure, l'anneau élastique étant en contact permanent avec l'alésage de la bague,
- la capacité de filtration et de vibration des bruits, compte-tenu de la présence des organes élastiques,
- la facilité de mise en oeuvre,
- la réduction du coût étant donné que le revêtement du type TEFLON® apparait seulement sur le pourtour externe de l'anneau et non plus dans l'alésage de la bague,
- un meilleur coefficient de frottement.

## Revendications

1. Dispositif de commande d'une boite de vitesses du type mono-barre découplée, l'extrémité de la barre reliant le pied du levier de vitesses, présentant une bague (1) dont l'alésage (1a) reçoit, avec capacité de déplacement multidirectionnel, une tête très sensiblement hémisphérique (T) solidaire d'un élément de renvoi (2) pour le passage des vitesses, caractérisé en ce que la tête hémisphérique (T) de l'élément de renvoi (2) comprend un corps (3) agencé pour le montage, avec capacité de déformation élastique d'un anneau de frottement hémisphérique (4), qui est fendu de manière à faire varier son diamètre à l'encontre d'organes élastiques (5) portés par le corps (3) qui est rigide, ledit anneau coopérant avec l'alésage (1a) de la bague en y étant logé en position de compression pour supprimer tout jeu.

2. Dispositif selon la revendication 1, caractérisé en ce que les agencements du corps (3) sont constitués par une gorge circulaire (3a) recevant le ou les organes déformables élastiquement (5) et sur lesquels prend appui l'anneau fendu (4), centré dans ladite gorge (3a), le ou lesdits organes (5) étant conformés pour soumettre l'anneau (4) à une force de poussée ayant tendance à l'écarter.

3. Dispositif selon la revendication 2, caractérisé en ce que le ou les organes déformables élastiquement (5) sont constitués par une bague en matière déformable, pour être sollicitée élastiquement, lors d'une déformation de l'anneau fendu (4), correspondant à un effet de resserrement dudit anneau.

4. Dispositif selon la revendication 3, caractérisé en ce que la bague (5) présente, en débordement de sa périphérie, des nervures circulaires profilées (5a), pour être sollicitées élastiquement lors d'une déformation de l'anneau fendu (4).

5. Dispositif selon la revendication 3, caractérisé en ce que la bague (5) présente des flasques latéraux circulaires (5b) pour le centrage de l'anneau fendu (4).

6. Dispositif selon la revendication 2, caractérisé en ce que le ou les organes déformables élastiquement (5) sont constitués par des joncs élastiques.

7. Dispositif selon la revendication 1, caractérisé en ce que l'anneau fendu (4) présente un revêtement externe glissant du type de celui connu sous la marque TEFLON®.

8. Dispositif selon la revendication 7, caractérisé en ce que le revêtement est plus épais dans la zone active et fonctionnelle de l'anneau (4).

9. Dispositif selon la revendication 1, caractérisé en ce que le corps (3) est réalisé dans un matériau souple déformable élastiquement.

## Patentansprüche

1. Schaltvorrichtung eines entkoppelten Einstangengetriebes, wobei das Ende der Stange, die die Verbindung mit dem Fußteil des Ganghebels herstellt, einen Ring (1) aufweist, dessen Bohrung (la) einen in mehrere Richtungen verschiebbaren, ziemlich genau halbkreisförmigen Kopf (T) aufweist, der mit einem Vorgelege für die Gangübertragung fest verbunden ist, dadurch gekennzeichnet, daß der halbkreisförmige Kopf (T) des Vorgeleges (2) ein Gehäuse (3) für die Montage eines elastisch verformbaren halbkreisförmigen Reibrings (4) besitzt, der gespalten ist, damit der Durchmesser im Verhältnis zu von dem starren Gehäuse (3) getragenen elastischen Organen (5) verändert werden kann, wobei der Reibring mit der Bohrung (la) des Rings zusammenwirkt und dabei zur Beseitigung jeglichen Spiels in Druckposition gelagert ist.

2. Vorrichtung nach Anspruch 1, dadurch gekennzeichnet, daß die Vorkehrungen des Gehäuses (3) aus einer kreisförmigen Nut (3a) bestehen, welche das (die) elastisch verformbare(n) Organ(e) (5) aufnimmt und auf denen der in der Nut (3a) zentrierte Spaltring (4) aufliegt, wobei das (die) Organ(e) so ausgebildet ist (sind), daß der Ring (4) einer abspreizend auf ihn einwirkenden Schubkraft ausgesetzt wird.

3. Vorrichtung nach Anspruch 2, dadurch gekennzeichnet, daß das (die) elastisch verformbare(n) Organ(e) (5) aus einem Ring aus verformbarem Material besteht (bestehen), um bei einer Verformung des Spaltrings (4) entsprechend einer verengenden Wirkung dieses Ringes elastisch beansprucht zu werden.

4. Vorrichtung nach Anspruch 3, dadurch gekennzeichnet, daß der Ring (5) über seinen Rand hinausragende kreisförmige Profilrippen (5a) aufweist, um bei einer Verformung des Spaltrings (4) elastisch beansprucht zu werden.

5. Vorrichtung nach Anspruch 3, dadurch gekennzeichnet, daß der Ring (5) kreisförmige Seitenplatten (5b) für die Zentrierung des Spaltrings (4) aufweist.

6. Vorrichtung nach Anspruch 2, dadurch gekennzeichnet, daß das (die) elastisch verformbare(n) Organ(e) (5) aus Federringen besteht (bestehen).

7. Vorrichtung nach Anspruch 1, dadurch gekennzeichnet, daß der Spaltring (4) eine gleitende Außenbeschichtung ähnlich derjenigen besitzt, die unter dem Markennamen TEFLON® bekannt ist.

8. Vorrichtung nach Anspruch 7, dadurch gekennzeichnet, daß die Beschichtung im aktiven und funktionellen Bereich des Ringes (4) dicker ist.

9. Vorrichtnug nach Anspruch 1, dadurch gekennzeichnet, daß das Gehäuse (3) aus einem elastisch verformbaren Weichmaterial besteht.

## Claims

1. Device for controlling a gearbox of the single-rod non-coupled type, the end of the rod connecting the base of the gear lever having a bush (1) of which the bore (la) accommodates, with the capacity for multidirectional displacement, an essentially hemispherical head (T) physically joined to a transmission element (2) for gear changing, characterised in that the hemispherical head (T) of the deflecting element (2) comprises a body (3) devised in order to allow mounting of a hemispherical friction ring (4) capable of elastic deformation which is split so that its diameter is altered when it presses against elastic units (5) supported by the body (3) which is rigid, said ring cooperating with bore (la) in the bush and being inserted inside it in a compressed position in order to eliminate any play.

2. Device as claimed in claim 1 characterised in that the features of the body (3) consist of a circular groove (3a) accommodating the elastically deformable unit(s) (5) and on which the split ring (4) presses, centred in said groove (3a), said unit(s) (5) being shaped in order to subject ring (4) to a thrust force that tends to spread it apart.

3. Device as claimed in claim 2 characterised in that the elastically deformable unit(s) (5) consist(s) of a bush made of deformable material that may be elastically stressed during deformation of split ring (4) corresponding to an effect that retightens said ring.

4. Device as claimed in claim 3 characterised in that bush (5) has, protruding from its periphery, circular shaped ribs (5a) that may be elastically stressed during deformation of split ring (4).

5. Device as claimed in claim 3 characterised in that bush (5) has lateral circular end shields (5b) in order to centre split ring (4).

6. Device as claimed in claim 2 characterised in that the elastically deformable unit(s) (5) consist of elastic retaining rings.

7. Device as claimed in claim 1 characterised in that split ring (4) has an external slippery coating of the type known under the brand name TEFLON®.

8. Device as claimed in claim 7 characterised in that the coating is thicker in the active, functional area of the ring (4).

9. Device as claimed in claim 1 characterised in that the body (3) is made from a flexible material capable of elastic deformation.
